# EUROPEAN PATENT APPLICATION

(11) **EP 3 569 833 A1**
(43) Date of publication of application: **20.11.2019**
(21) Application number: 18739376.4
(22) Date of filing: 10.01.2018
(51) Int. Cl.: F01N 3/08, B01D 53/94, F01N 3/24, H05B 6/74, F01N 3/20, F01N 13/08

(54) **CATALYST HEATING DEVICE AND HEATING DEVICE**

(30) Priority: 13.01.2017 JP 2017004661
(71) Applicant: Panasonic Corporation, Kadoma-shi, Osaka 571-8501 (JP); TOYOTA JIDOSHA KABUSHIKI KAISHA, Toyota-shi, Aichi, 471-8571 (JP)
(72) Inventor: IKEDA, Hikaru, Osaka-shi, Osaka 540-6207 (JP); OTSUKI, Hiroshi, Aichi-ken, 471-8571 (JP); IKEDA, Shinji, Aichi-ken, 471-8571 (JP); INAMI, Norio, Aichi-ken, 471-8571 (JP)
(74) Representative: Appelt, Christian W.
(86) International application number: PCT/JP2018/000234
(87) International publication number: WO 2018/131579

(57) **Abstract**

An object of one aspect of the present disclosure would be to propose a catalyst heating device and a heating device with heating efficiency higher than before. The catalyst heating device (1) includes: an irradiation unit (11); and a control unit (10). The irradiation unit (11) includes an antenna (21) and is configured to radiate a microwave through the antenna (21) to a catalyst device (3) which has microwave absorbability and is configured to purify gas, to heat the catalyst device (3). The control unit (10) has a function of allowing the irradiation unit (11) to make irradiation with the microwave under an irradiation condition including at least any of a frequency of the microwave and a position of the antenna (21), and has a function of changing the irradiation condition.

## Description

### Technical Field

The present disclosure relates to catalyst heating devices and heating devices and in particular relates to a catalyst heating device for heating a catalyst device with a microwave and a heating device for heating an object-to-be-heated, with a microwave.

### Background Art

It has been known a device which is installed in a vehicle and heats a purifying means (catalyst device) of purifying exhaust so that the catalyst device has a temperature suitable for purification of exhaust (e.g., see Patent Literature 1).

The device disclosed in Patent Literature 1 irradiates the purifying means (catalyst device) with an electric wave absorbing member (microwave absorber) with a microwave having a constant frequency, thereby heating the purifying means.

Regarding a case of heating the purifying means (catalyst device) or the object-to-be-heated by irradiating it with a microwave having a constant frequency, a temperature increase rate becomes slow after a temperature of the catalyst device or an object-to-be-heated exceeds a certain temperature. Consequently, heating efficiency becomes poor.

### Citation List

### Patent Literature

Patent Literature: JP 04-353208 A

### Summary of Invention

In view of the above insufficiency, an object of one aspect of the present disclosure would be to propose a catalyst heating device and a heating device with heating efficiency higher than before.

A catalyst heating device according to an aspect of the present disclosure includes an irradiation unit and a control unit. The irradiation unit includes an antenna and is configured to radiate a microwave through the antenna to a catalyst device which has microwave absorbability and is configured to purify gas, to heat the catalyst device. The control unit has a function of allowing the irradiation unit to make irradiation with the microwave under an irradiation condition including at least any of a frequency of the microwave and a position of the antenna, and has a function of changing the irradiation condition.

A catalyst heating device according to an aspect of the present disclosure includes a plurality of irradiation units and a control unit. Each of the plurality of irradiation units includes an antenna and is configured to radiate a microwave through the antenna to a catalyst device which has microwave absorbability and is configured to purify gas, to heat the catalyst device. The control unit has a function of allowing each of the plurality of irradiation units to make irradiation with the microwave under an irradiation condition including at least any of a frequency of the microwave, a phase of the microwave, and a position of the antenna, and has a function of changing the irradiation condition.

A heating device according to an aspect of the present disclosure includes an irradiation unit, a control unit, a first microwave detection unit, and a second microwave detection unit. The irradiation unit includes an antenna and is configured to radiate a microwave through the antenna to an object-to-be-heated serving as a heat target to heat the catalyst device. The control unit has a function of allowing the irradiation unit to make irradiation with the microwave under an irradiation condition including at least any of a frequency of the microwave and a position of the antenna, and has a function of changing the irradiation condition. The first microwave detection unit is configured to measure a value of transmission power of the microwave radiated from the irradiation unit. The second microwave detection unit is configured to, in response to reception of an unabsorbed microwave which is part of the microwave and is not absorbed by the object-to-be-heated, measure a value of reception power of the unabsorbed microwave. The control unit is configured to change the irradiation condition based on the value of the transmission power and the value of the reception power.

A heating device according to an aspect of the present disclosure includes a plurality of irradiation units and a control unit. Each of the plurality of irradiation units includes an antenna and is configured to radiate a microwave through the antenna to an object-to-be-heated serving as a heat target to heat the object-to-be-heated. The control unit has a function of allowing each of the plurality of irradiation units to make irradiation with the microwave under an irradiation condition including at least any of a frequency of the microwave, a phase of the microwave, and a position of the antenna, and has a function of changing the irradiation condition.

### Brief Description of Drawings

FIG. 1 is a diagram for illustration of a configuration of a catalyst heating device of Embodiment 1.
FIG. 2 is a diagram for illustration of a configuration of an irradiation unit and a detection unit included in the catalyst heating device of the above.
FIG. 3 is a diagram for illustration of a relation between a return loss of a microwave radiated from the catalyst device of the above and a temperature of the catalyst device.
FIG. 4 is a diagram for illustration of a configuration of a catalyst heating device of Embodiment 2.
FIG. 5 is a diagram for illustration of a configuration of a plurality of irradiation units and a plurality of detection units included in the catalyst heating device of the above.
FIG. 6 is a diagram for illustration of a configuration of a catalyst heating device of Embodiment 3.
FIG. 7 is a diagram for illustration of a configuration of a catalyst heating device of Embodiment 4.
FIG. 8 is a diagram for illustration of a configuration of a catalyst heating device of Embodiment 5.
FIG. 9 is a diagram for illustration of a configuration of a catalyst heating device of Embodiment 6.
FIG. 10A and FIG. 10B are diagrams for illustration of a configuration of a catalyst heating device of Embodiment 7.

### Description of Embodiments

Embodiments and variations described below are some of examples according to the present disclosure and therefore the present disclosure may not be limited to the embodiments and variations shown below. These embodiments and variations may be modified in various ways in accordance with design or the like as long as they still fall within the scope of the technical concept inherent to the present disclosure.

### (Embodiment 1)

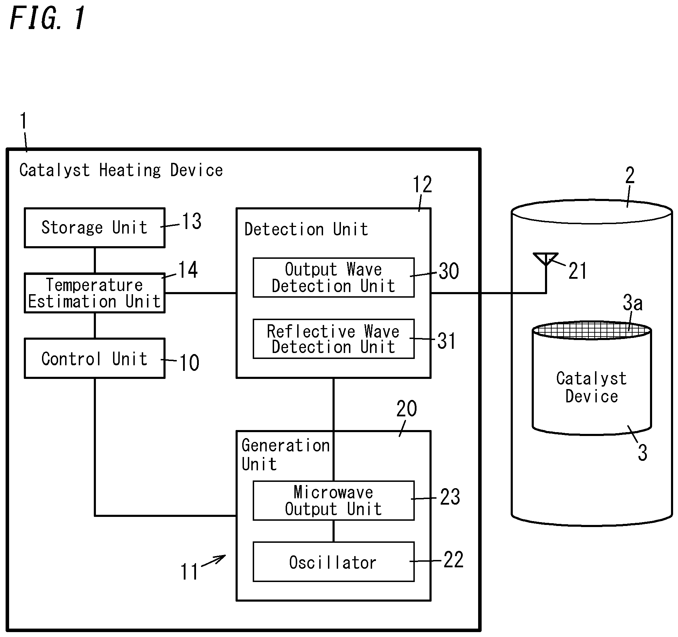

A catalyst heating device 1 of the present embodiment is described with reference to FIG. 1 to FIG. 3.

The catalyst heating device 1 is a device for irradiating, with a microwave, a catalyst device 3 located inside a cavity 2 attached to a vehicle emitting exhaust to the outside, thereby heating the catalyst device 3. The catalyst device 3 is formed to have a hollow cylindrical shape and is configured to purify exhaust. The catalyst device 3 includes a ceramic product with a honeycomb structure including a lot of through holes, a microwave absorber 3a, and a catalyst. The microwave absorber 3a is made of material including silicon carbide (SiC). The microwave absorber 3a absorbs a microwave radiated from the catalyst heating device 1 and generates heat. The catalyst purifies exhaust. The microwave absorber 3a and the catalyst are applied for each hole of the honeycomb structure in the order of the microwave absorber 3a and the catalyst. Regarding the catalyst device 3, the microwave absorber 3a absorbs a microwave and then generates heat. Thus, the catalyst is heated. The catalyst with a high temperature promotes purification of exhaust. Note that, a shape of the catalyst device 3 may not be limited to a hollow cylindrical shape. It is sufficient that the shape of the catalyst device 3 may be a hollow prismatic shape or may be a polygonal hollow prismatic shape.

The catalyst heating device 1 uses an irradiation condition including a frequency of a microwave and has a function of changing the irradiation condition. When a condition (change condition) for changing the irradiation condition is satisfied while a microwave of a frequency fa is radiated, the catalyst heating device 1 changes a frequency of the microwave from the frequency fa to a frequency fb and continues irradiation with the microwave.

As shown in FIG. 1, the catalyst heating device 1 includes a control unit 10, an irradiation unit 11, a detection unit 12, a storage unit 13, and a temperature estimation unit 14.

The control unit 10 is responsible for control relating to radiation of a microwave. The control unit 10 is constituted by a microcomputer including main components including a central processing unit (CPU) and a memory. In other words, the control unit 10 is realized by a computer including a CPU and a memory. The CPU executing a program stored in the memory allows a computer to functions as the control unit 10. In this regard, the program is stored in the memory of the control unit 10 in advance, but may be provided through telecommunication circuits or may be provided with being recorded in one or more non transitory recording media such as a memory card.

The control unit 10 has a function of changing the aforementioned irradiation condition. For example, the control unit 10 changes the irradiation condition in accordance with a temperature of the catalyst device 3. When the irradiation condition includes a frequency of a microwave, the control unit 10 performs control of allowing the irradiation unit 11 to make irradiation with a microwave with a frequency which is selected from microwaves with frequencies, by that function.

The irradiation unit 11 includes a generation unit 20 and an antenna 21. The irradiation unit 11 is configured to radiate a microwave to the catalyst device 3 via the antenna 21 to heat the catalyst device 3. The generation unit 20 includes an oscillator 22 and a microwave output unit 23.

The oscillator 22 is a semiconductor microwave oscillator and produces a signal serving as a basis for a microwave of a frequency corresponding to an instruction from the control unit 10.

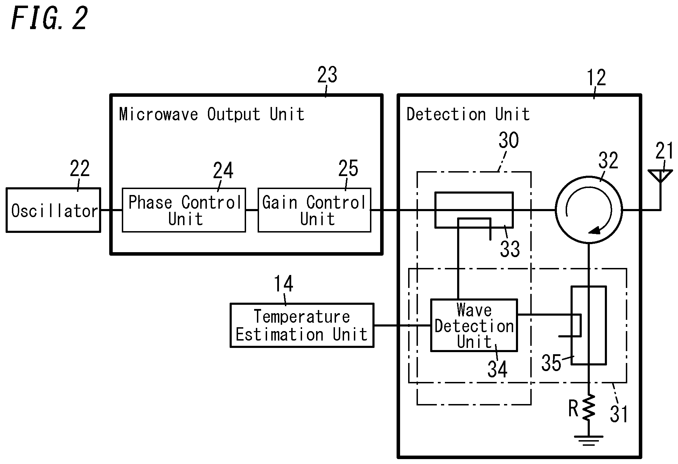

As shown in FIG. 2, the microwave output unit 23 includes a phase control unit 24 and a gain control unit 25. The phase control unit 24 is constituted by a quadrature modulation circuit, for example. The phase control unit 24 changes a phase of a signal produced by the oscillator 22 in accordance with an instruction from the control unit 10. The gain control unit 25 adjusts a gain of a signal produced by the oscillator 22.

The antenna 21 radiates a signal received from the generation unit 20 as a microwave to the catalyst device 3. The antenna 21 receives a reflective wave from a radiated microwave, that is a microwave not absorbed by the catalyst device 3 (i.e., an unabsorbed microwave).

As shown in FIG. 2, the detection unit 12 includes a circulator 32, a first directional coupler 33, a wave detection unit 34, a second directional coupler 35, and a termination resistor R.

When receiving a signal from the microwave output unit 23, the circulator 32 outputs the signal received to the antenna 21. When receiving a signal from the antenna 21, the circulator 32 outputs the signal received to the termination resistor R. The first directional coupler 33 and the second directional coupler 35 each separate part from a signal.

The wave detection unit 34 measures a value of transmission power of a microwave radiated from the antenna 21 by use of a part separated from a signal by the first directional coupler 33. The wave detection unit 34 measures a value of reception power of a microwave received by the antenna 21 (reflective wave) by use of a part separated from a signal by the second directional coupler 35.

The output wave detection unit 30 (first microwave detection unit) shown in FIG. 1 is constituted by the first directional coupler 33 and the wave detection unit 34. The reflective wave detection unit 31 (second microwave detection unit) shown in FIG. 1 is constituted by the second directional coupler 35 and the wave detection unit 34.

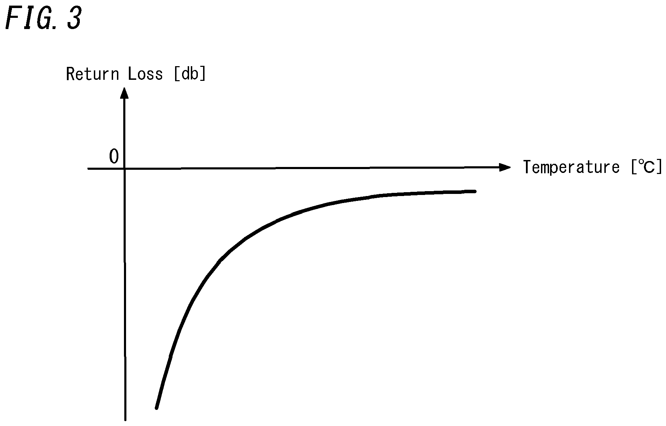

The storage unit 13 stores a temperature table which associates a ratio of a value of the transmission power [W] and a value of the reception power [W] and a temperature of the catalyst device 3 with each other, for each of a plurality of frequencies used for irradiation. In the present embodiment, the ratio of a value of the transmission power [W] and a value of the reception power [W] is defined by a return loss of a microwave. The return loss can be calculated by a mathematical formula "Return Loss [db] = 10 ^{∗} Log (Reception Power / Transmission Power)". The return loss is represented by a logarithm of a ratio of a value of the reception power and a value of the transmission power, and therefore normally is a negative value. Increase in the return loss means decrease in energy absorbed by the catalyst device 3. In contrast, decrease in the return loss means increase in the catalyst device 3. Note that, the reception power used for calculating the return loss may be reception power of a microwave reflected by the catalyst device 3 in some cases but may be reception power of a microwave transmitting through the catalyst device 3 in other cases. In the case of irradiation with a microwave having a constant frequency, to absorb the microwave is easy for the catalyst device 3 when a temperature of the catalyst device 3 is relatively low. In contrast, to absorb the microwave is difficult for the catalyst device 3 when a temperature of the catalyst device 3 exceeds a certain temperature. In summary, there may be a relation that the return loss of the microwave increases (gets closer to zero) with increase in the temperature of the catalyst device 3 and the return loss becomes substantially constant after the temperature exceeds a predetermined temperature (see FIG. 3). The storage unit 13 stores a temperature table representing this relation for each frequency. When frequencies are different, temperatures associated with the same ratio of the transmission power and the reception power (the same value of the return loss) are different. For example, a value "m (< 0)" of a return loss for a microwave with a frequency fa is associated with a temperature "30 °C". However, a value "m" of a return loss for a microwave with a frequency fb is associated with a temperature "130 °C". To sum up, ranges of temperatures capable of being estimated are different for different frequencies. In view of this, the storage unit 13 includes a temperature table associating a return loss of a microwave and a temperature of the catalyst device 3 with each other, for each frequency.

The temperature estimation unit 14 receives a value of the transmission power from the output wave detection unit 30 and a value of the reception power from the reflective wave detection unit 31, then calculates a return loss of the microwave (a ratio of the value of the transmission power and the value of the reception power) by use of the aforementioned mathematical formula, and then estimates a temperature corresponding to the return loss by use of the storage unit 13. In detail, the temperature corresponding to the return loss calculated is obtained by use of a temperature table corresponding to a frequency of a microwave radiated. In this case, the control unit 10 determines based on the temperature estimated by the temperature estimation unit 14 whether to change the irradiation condition, that is, whether to change the frequency, and controls the irradiation unit 11 in accordance with the result of determination.

Next, operation of the catalyst heating device 1 is described.

First, the control unit 10 controls the irradiation unit 11 so that the irradiation unit 11 radiates a microwave with a single frequency (e.g., the frequency fa).

The oscillator 22 of the irradiation unit 11 produces a signal with a frequency indicated by the control unit 10. The microwave output unit 23 performs gain adjustment and the like of a signal produced, and radiates a microwave with the frequency indicated by the control unit 10 to the catalyst device 3 via the antenna 21. The output wave detection unit 30 measures a value of the transmission power of the microwave at a timing of sending the microwave.

The antenna 21 receives a reflective wave originating from the microwave radiated. The reflective wave detection unit 31 measures a value of the transmission power of the reflective wave at a timing of receiving the reflective wave.

The temperature estimation unit 14 calculates the return loss of the microwave from the value of the transmission power measured by the output wave detection unit 30 and the value of the reception power measured by the reflective wave detection unit 31, by use of the aforementioned mathematical formula. The temperature estimation unit 14 estimates a temperature corresponding to the return loss calculated, by use of the temperature table corresponding to the frequency indicated by the control unit 10.

The control unit 10 determines whether or not the temperature estimated (estimation temperature) is equal to or larger than a predetermined threshold value (first threshold value). In this regard, the first threshold value corresponds to a temperature enough for the catalyst device 3 to purify exhaust.

When the estimation temperature is determined to be equal to or larger than the first threshold value, the control unit 10 stops radiation of the microwave.

When the estimation temperature is determined to be smaller than the first threshold value, the control unit 10 determines whether to change the frequency of the microwave radiated. In detail, the control unit 10 determines whether or not the estimation temperature is equal to or larger than a threshold value (second threshold value) set for the frequency indicated by the control unit 10. Note that, the second threshold values are different for different frequencies.

When the estimation temperature is determined to be equal to or larger than the second threshold value, that is, it is determined to change the frequency, the control unit 10 changes the frequency of the microwave to be radiated. For example, the frequency of the microwave is changed from the frequency fa to the frequency fb. The control unit 10 controls the irradiation unit 11 so that the irradiation unit 11 radiates the microwave with the changed frequency. In this regard, the frequency fb is a frequency higher than the frequency fa.

When the estimation temperature is smaller than the second threshold value, that is, it is determined not to change the frequency, the control unit 10 does not change the frequency of the microwave to be radiated. The control unit 10 controls the irradiation unit 11 so that the irradiation unit 11 radiates the microwave with the same frequency.

The catalyst heating device 1 repeats the aforementioned operation until the estimation temperature becomes equal to or larger than the first threshold value.

As described above, in the storage unit 13, the temperature ranges of temperatures capable of being estimated by the temperature estimation unit 14 are different for different frequencies. For example, it is supposed that the microwave with the frequency fa allows estimation of temperature up to 100 °C and the microwave with the frequency fb allows estimation of temperature ranging from 100 to 200 °C. In this case, the catalyst heating device 1 uses the microwave with the frequency fa to estimate a temperature up to 100 °C, and uses the microwave with the frequency fb to estimate a temperature in a range of 100 to 200 °C.

Note that, each of the temperature tables for individual frequencies may have a range of temperatures capable of being estimated which may overlap with a range of temperatures before the range thereof and also may overlap with a range of temperatures after the range thereof. For example, regarding a temperature table (first temperature table) for the frequency fa and a temperature table (second temperature table) for the frequency fb, a range of temperatures capable of being estimated by the first temperature table may range from 0 to 100 °C, and a range of temperatures capable of being estimated by the second temperature table may range from 90 to 200 °C. In this regard, in an overlapping range (90 to 100 °C), the control unit 10 controls the irradiation unit 11 so that the irradiation unit 11 performs irradiation with the microwave with the frequency fa and irradiation with the microwave with the frequency fb alternately. The temperature estimation unit 14 estimates temperatures respectively corresponding to the frequencies fa and fb, and uses, as the estimation temperature, the highest of the temperature corresponding to the frequency fa and the temperature corresponding to the frequency fb which are estimated. Note that, the temperature estimation unit 14 may use, as the estimation temperature, an average or a representative value of the temperature corresponding to the frequency fa and the temperature corresponding to the frequency fb. Or, the temperature estimation unit 14 may use, as the estimation temperature, the lowest of the temperature corresponding to the frequency fa and the temperature corresponding to the frequency fb which are estimated.

In a process of increasing a temperature of the catalyst device 3, there may be the most suitable frequency for each temperature range. For example, as described above, the frequency fa is the most suitable frequency for a variation of a temperature up to 100 °C and the frequency fb is the most suitable frequency for a variation of a temperature from 100 to 200 °C. Therefore, changing the frequency of the microwave radiated to the catalyst device 3 can improve heating efficiency. Additionally, by estimating a temperature of the catalyst device 3 and changing the frequency of the microwave in accordance with the temperature estimated (estimation temperature), improvement of heating efficiency can be realized.

In the present embodiment, the irradiation condition includes the frequency of the microwave, and the catalyst heating device 1 has a configuration of changing the irradiation condition, that is, a configuration of changing the frequency of the microwave to be radiated, but the catalyst heating device 1 is not limited to having this configuration. The irradiation condition may include a position of the antenna 21 and the catalyst heating device 1 has a configuration of changing the position of the antenna 21. For example, the irradiation unit 11 may include a plurality of antennas and a radiation direction and/or a radiation distance of a microwave can be changed by switching an antenna to be used, from one to another of the plurality of antennas. In this case, the plurality of antennas may be situated inside the cavity 2 and the set positions thereof may not be particularly limited. Or, the irradiation condition may include the position of the antenna 21 and the irradiation condition may be changed by beamforming with a single antenna 21. Also in this case, heating efficiency of the catalyst device 3 can be improved.

In summary, it is sufficient that the irradiation condition includes at least one of the frequency of the microwave and the position of the antenna 21 and the catalyst heating device 1 has a function of changing the irradiation condition.

In the present embodiment, the temperature estimation unit 14 has a configuration of estimating a temperature by use of a temperature table corresponding to a single frequency in temperature estimation, but may not be limited to having this configuration. In the temperature estimation, the temperature estimation unit 14 may estimate a temperature by use of temperature tables for individual frequencies. For example, when the microwave with the frequency set to the frequency fa is radiated, the temperature estimation unit 14 estimates a temperature (first temperature) from the temperature table corresponding to the frequency fa. Thereafter, the control unit 10 switches the frequency from the frequency fa to the frequency fb and radiates the microwave with the frequency fb. The temperature estimation unit 14 estimates a temperature (second temperature) from the temperature table corresponding to the frequency fb. The temperature estimation unit 14 adopts a higher one of the first temperature and the second temperature as the estimation temperature. Note that, the estimation temperature may be an average or a minimum value of a plurality of temperatures obtained. Note that, how to obtain temperatures corresponding to a plurality of frequencies is not limited to the aforementioned method. It is enough that a method allows estimation of temperatures individually corresponding to the plurality of frequencies in calculating the estimation temperature. For example, the catalyst heating device 1 may change the frequency of the microwave at a predetermined cycle. By estimating a temperature for each of the plurality of frequencies, accuracy of the temperature estimation can be improved.

In the present embodiment, switching of the frequency of the microwave is performed based on the temperature of the catalyst device 3 estimated. However, the present embodiment may not be limited to this configuration. Switching of the frequency of the microwave can be performed based on the return loss of the microwave (the ratio of the value of the transmission power and the value of the reception power). For example, switching of the frequency of the microwave may be performed when a value of the return loss becomes equal to or larger than a predetermined value.

The present embodiment adopts a configuration where the catalyst and the microwave absorber 3a are provided as separate parts, but may not be limited to adopting this configuration. It may be applicable that catalyst with microwave absorbability is applied onto the ceramic product. In summary, it is sufficient that the catalyst device 3 has microwave absorbability.

### (Embodiment 2)

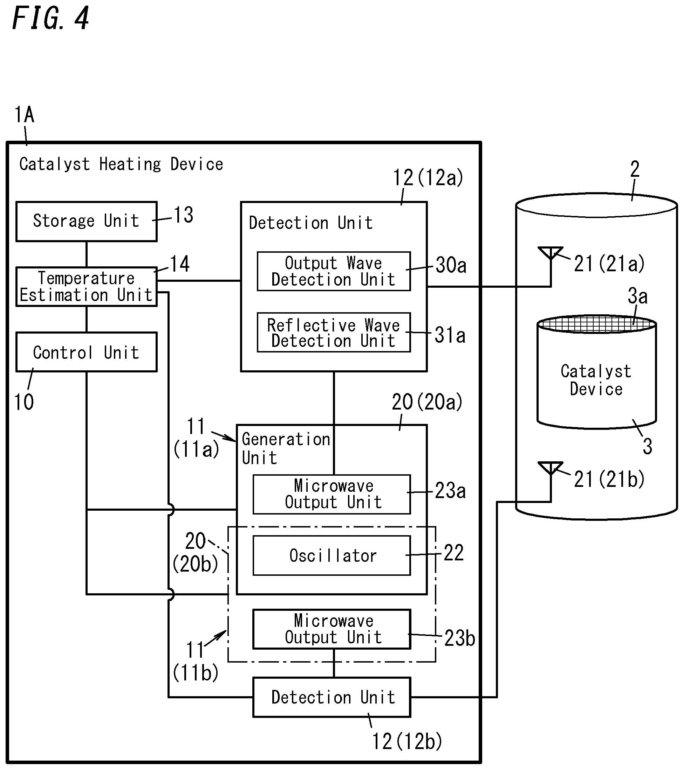

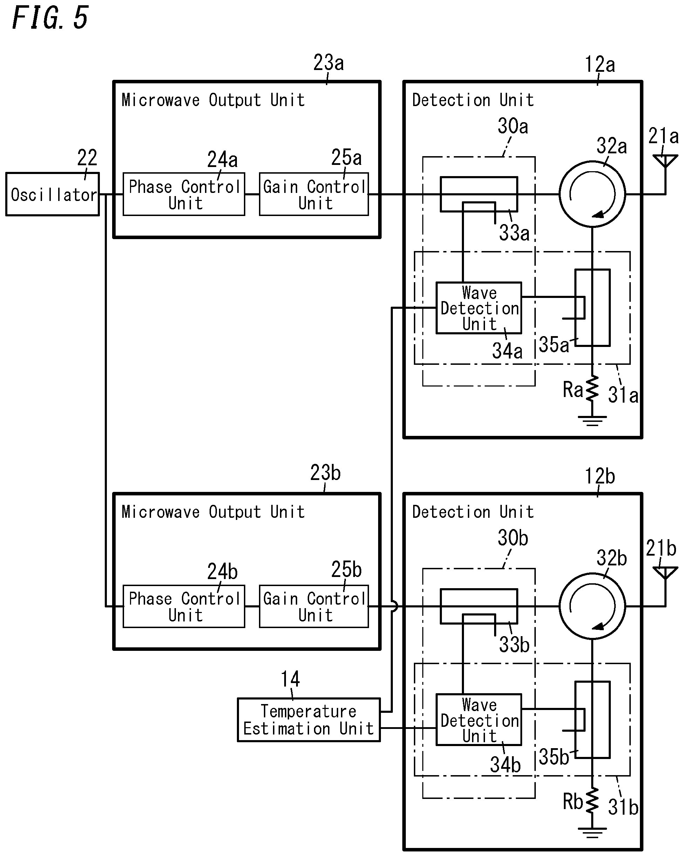

A catalyst heating device 1A of the present embodiment is described with reference to FIG. 4 and FIG. 5.

The catalyst heating device 1A of the present embodiment is different from the catalyst heating device 1 of Embodiment 1 in that the catalyst heating device 1A includes a plurality of irradiation units 11 and a plurality of detection units 12. Hereinafter, differences between the present embodiment and Embodiment 1 are described mainly. Note that, analogous components to Embodiment 1 are designated by the same reference signs and thus explanations thereof are omitted appropriately.

The catalyst heating device 1A of the present embodiment includes a control unit 10, a plurality of irradiation units 11 (in this regard, two irradiation units 11), a plurality of detection units 12 (in this regard, two detection units 12), a storage unit 13, and a temperature estimation unit 14. Note that, to distinguish the two irradiation units 11, they may be referred to as an irradiation unit 11a and an irradiation unit 11b. To distinguish the two detection units 12, they may be referred to as a detection unit 12a and a detection unit 12b. The plurality of irradiation units 11 are individually associated with the plurality of detection units 12. In the present embodiment, the irradiation unit 11a is associated with the detection unit 12a and the irradiation unit 11b is associated with the detection unit 12b.

The control unit 10 has a function of changing an irradiation condition, similarly to that in Embodiment 1. Due to this function, the control unit 10 performs control of the plurality of irradiation units 11 so that the irradiation units 11 radiate microwaves with a frequency selected from a plurality of frequencies.

The irradiation unit 11a includes a generation unit 20a and an antenna 21a. The irradiation unit 11a radiates a microwave to the catalyst device 3 via the antenna 21a to heat the catalyst device 3. The generation unit 20a includes an oscillator 22 and a microwave output unit 23a.

The irradiation unit 11b includes a generation unit 20b and an antenna 21b.
The irradiation unit 11b radiates a microwave to the catalyst device 3 via the antenna 21b to heat the catalyst device 3. The generation unit 20b includes the oscillator 22 and a microwave output unit 23b. In summary, the irradiation unit 11a and the irradiation unit 11b share the oscillator 22 as a common component.

As shown in FIG. 5, the microwave output unit 23a includes a phase control unit 24a and a gain control unit 25a. As shown in FIG. 5, the microwave output unit 23b includes a phase control unit 24b and a gain control unit 25b. Note that, the phase control units 24a and 24b have an analogous function to the phase control unit 24 of Embodiment 1, and the gain control units 25a and 25b have an analogous function to the gain control unit 25 of Embodiment 1, and therefore they are not described in detail here.

As shown in FIG. 5, the detection unit 12a includes a circulator 32a, a first directional coupler 33a, a wave detection unit 34a, a second directional coupler 35a, and a termination resistor Ra. As shown in FIG. 5, the detection unit 12b includes a circulator 32b, a first directional coupler 33b, a wave detection unit 34b, a second directional coupler 35b, and a termination resistor Rb. Note that, the circulators 32a and 32b each have an analogous function to the circulator 32 of Embodiment 1, the first directional couplers 33a and 33b each have an analogous function to the first directional coupler 33 of Embodiment 1, and therefore they are not described in detail here. The wave detection units 34a and 34b each have an analogous function to the wave detection unit 34 of Embodiment 1, the second directional couplers 35a and 35b each have an analogous function to the second directional coupler 35 of Embodiment 1, and therefore they are not described in detail here.

In this regard, the output wave detection unit 30a (first microwave detection unit) is constituted by the first directional coupler 33a and the wave detection unit 34a. The reflective wave detection unit 31a (second microwave detection unit) is constituted by the second directional coupler 35a and the wave detection unit 34a. The output wave detection unit 30b is constituted by the first directional coupler 33b and the wave detection unit 34b. The reflective wave detection unit 31b is constituted by the second directional coupler 35b and the wave detection unit 34b.

The storage unit 13 of the present embodiment stores a temperature table for each combination of a frequency and an antenna, that is, each combination of a frequency and a position of an antenna. The temperature table of the present embodiment associates a temperature and a return loss (a ratio of a value of the transmission power and a value of the reception power) relating to a corresponding antenna with each other.

The temperature estimation unit 14 of the present embodiment estimates a first estimation temperature by use of the storage unit 13, based on a ratio of a value of the transmission power and a value of the reception power received from the detection unit 12a, that is, based on a return loss obtained from the ratio of the value of the transmission power and the value of the reception power received from the detection unit 12a. The temperature estimation unit 14 of the present embodiment estimates a second estimation temperature by use of the storage unit 13, based on a ratio of a value of the transmission power and a value of the reception power received from the detection unit 12b, that is, based on a return loss obtained from the ratio of the value of the transmission power and the value of the reception power received from the detection unit 12b. The temperature estimation unit 14 regards, as an estimation temperature, the highest of the first estimation temperature and the second estimation temperature. In this regard, the control unit 10 determines whether to change the irradiation condition, that is, whether to change the frequency, based on the estimation temperature estimated by the temperature estimation unit 14. The control unit 10 controls the irradiation unit 11 in accordance with the result of determination.

Note that, the temperature estimation unit 14 adopts an estimation method of regarding the highest of a plurality of temperatures obtained from the storage unit 13 as the estimation temperature. However, the estimation method may not be limited to the above. The temperature estimation unit 14 may regard, as the estimation temperature, an average or the lowest of a plurality of temperatures obtained from the storage unit 13.

The present embodiment has a configuration where the single oscillator 22 is included in components common to the plurality of irradiation units 11a and 11b, but may not be limited to having this configuration. The present embodiment may have a configuration where the plurality of irradiation units 11a and 11b include individual oscillators.

In the present embodiment, the microwave output unit 23a and the microwave output unit 23b include the phase control unit 24a and the phase control unit 24b, respectively. The control unit 10 may preferably control the irradiation units 11a and 11b so that a phase of a microwave outputted from the microwave output unit 23a and a phase of a microwave outputted from the microwave output unit 23b are different from each other. In this case, the irradiation condition includes a phase of a microwave and a frequency of the microwave. The control unit 10 changes the irradiation conditions individually corresponding to the plurality of irradiation units 11 so that the irradiation conditions include different phases, thereby controlling the plurality of irradiation units 11 so that the irradiation units 11 radiate microwaves having the same frequency but different phases.

In this case, the storage unit 13 stores a temperature table for each combination of a frequency, a phase, and a position of an antenna. The temperature table of the present embodiment associates a temperature and a return loss (a ratio of a value of the transmission power and a value of the reception power) relating to a corresponding antenna. For example, the catalyst heating device 1 changes the phase by a unit of 45°. Examples of the phase may include 0°, 45°, 90°, and the like. The number of combinations of the frequency fa, the antenna 21, and the phase is eight. Temperature tables corresponding to the individual combinations are stored in the storage unit 13. The temperature estimation unit 14 calculates a return loss from values of the transmission power and the reception power received from the detection unit 12a (12b), by use of the mathematical formula described in relation to Embodiment 1. The temperature estimation unit 14 selects, from the storage unit 13, a temperature table corresponding to a combination of a frequency of a microwave radiated by the irradiation unit 11a (11b) associated with the detection unit 12a (12b), the antenna 21a (21b), and a delay (lead) from a reference by phase control. The temperature estimation unit 14 obtains a temperature corresponding to the return loss calculated, from the temperature table selected.

In the present embodiment, it is sufficient that the antennas 21a and 21b are inside the cavity 2 and positions of the antennas 21a and 21b inside the cavity 2 do not matter. In FIG. 4, the antenna 21a is positioned at a first end of the catalyst device 3 and the antenna 21b is positioned at a second end of the catalyst device 3 but the antennas 21a and 21b may be positioned at the first end of the catalyst device 3.

In the present embodiment, the temperature estimation unit 14 is configured to calculate a return loss (a ratio of a value of the transmission power and a value of the reception power) for each of the irradiation units 11 by use of the mathematical formula described in relation to Embodiment 1 and estimate temperatures and obtain an estimation temperature of the catalyst device 3 from the temperatures estimated. However, the temperature estimation unit 14 may not be configured as above.

The temperature estimation unit 14 may estimate a temperature of the catalyst device 3 from the sum of values of the transmission power measured by the plurality of output wave detection units 30 and the sum of values of the reception power measured by the plurality of reflective wave detection units 31. In detail, the temperature estimation unit 14 calculates a return loss by use of the sum of values of the transmission power measured by the plurality of output wave detection units 30, the sum of values of the reception power measured by the plurality of reflective wave detection units 31, and the mathematical formula referred to in Embodiment 1. The temperature estimation unit 14 obtains a temperature corresponding to the return loss calculated, from a temperature table corresponding to a frequency of a microwave radiated. In this case, each of temperature tables corresponding to a plurality of irradiation conditions (e.g., a plurality of frequencies) may be a table associating a ratio of the total transmission power and the total reception power and a temperature of the catalyst device 3 with each other. In this regard, the total transmission power represents the sum of values of the transmission power measured by the plurality of output wave detection units 30. The total reception power represents the sum of values of the reception power measured by the plurality of reflective wave detection units 31. Also in the case of calculating a return loss from the sum of values of the transmission power and the sum of values of the reception power, a phase of a microwave outputted from the microwave output unit 23a and a phase of a microwave outputted from the microwave output unit 23b may be different from each other.

In the present embodiment, the plurality of irradiation units 11 radiate microwaves to the catalyst device 3 and therefore heating efficiency of the catalyst device 3 can be improved. Additionally, the plurality of detection units 12 measures values of the transmission power and the reception power and therefore accuracy of temperature estimation can be improved.

### (Embodiment 3)

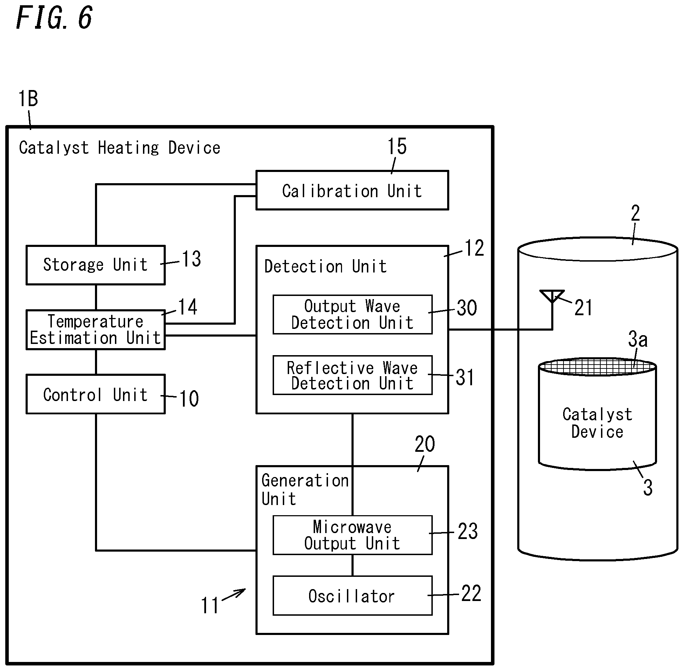

A catalyst heating device 1B of the present embodiment is described with reference to FIG. 6.

The catalyst heating device 1B of the present embodiment is different from the catalyst heating device 1 of Embodiment 1 in that the catalyst heating device 1B further includes a calibration unit 15. Hereinafter, differences between the present embodiment and Embodiment 1 are described mainly. Note that, analogous components to Embodiment 1 are designated by the same reference signs and thus explanations thereof are omitted appropriately.

The calibration unit 15 is configured to perform correction of a temperature table, in particular, correction of temperature data corresponding to a return loss included in a temperature table.

Hereinafter, operation of correction of temperatures is described.

The irradiation unit 11 radiates a correction microwave when a temperature of the catalyst device 3 is equal to an outdoor temperature. For example, the irradiation unit 11 radiates a correction microwave with a predetermined frequency via the antenna 21 at a timing of starting a vehicle (starting an engine). The correction microwave is a microwave which is lower in transmission power than a microwave radiated for heating the catalyst device 3.

The output wave detection unit 30 measures, at a timing of radiating the correction microwave, a value of the transmission power of the correction microwave. The reflective wave detection unit 31 measures, at a timing of receiving of an unabsorbed correction microwave which is part of the correction microwave and is not absorbed by the catalyst device 3, a value of the reception power of the unabsorbed correction microwave.

The temperature estimation unit 14 obtains a temperature corresponding to a return loss of the correction microwave (a ratio of a value of the transmission power of the correction microwave and a value of the reception power of the unabsorbed correction microwave), from a temperature table corresponding to a frequency of the microwave transmitted. Further, the temperature estimation unit 14 obtains an outdoor temperature from a temperature sensor which is provided in a vehicle in advance and is configured to measure an outdoor temperature.

The calibration unit 15 determines a correction value from a temperature estimated by the temperature estimation unit 14 and a predetermined temperature (outdoor temperature). The calibration unit 15 corrects one or more temperatures included in the temperature table used for estimation by use of the correction value. For example, when subtracting the predetermined temperature from the temperature estimated by the temperature estimation unit 14 gives a value a, temperatures included in the temperature table used for estimation are decreased across the board by the value a.

Note that, the present embodiment is configured to determine the correction value at the timing of starting the engine but may not be limited as above. After the engine is started, exhaust causes increase in the temperature of the inside of the cavity 2. Therefore, the temperature of the inside of the cavity 2 (e.g., 1000 °C) can be estimated based on an exhaust temperature which can be estimated from a load of the engine (e.g., a torque and the number of revolutions). For this reason, the catalyst heating device 1 radiates the correction microwave and estimates the temperature. The correction value is determined by use of the temperature estimated and the aforementioned 1000 degrees, for example.

In the present embodiment, the catalyst heating device 1B is configured to radiate the correction microwave which has the transmission power lower than the transmission power of the microwave radiated for heating the catalyst device 3, but may not be configured as above. The transmission power of the correction microwave may be equal to or higher than the transmission power of the microwave radiated for heating the catalyst device 3. However, to correct the temperature table, it is necessary to obtain an appropriate correction value. Therefore, it is preferable to transmit a microwave with power lower than the transmission power of the microwave radiated for heating the catalyst device 3.

It is considered that the reason why a temperature estimated in a case of irradiation with the correction microwave is different from an actual temperature (e.g., an outside temperature) is that soot or the like adheres to the catalyst device 3. In view of this, the catalyst heating device 1B may burn soot or the like adhering to the catalyst device 3 by means of irradiation with a microwave. By doing so, it is expected to reduce a difference between the temperature estimated and the actual temperature.

In the present embodiment, the calibration unit 15 corrects the temperature table and therefore an error of the temperature estimation can be reduced even if soot or the like adheres to the catalyst device 3.

Note that, features of the catalyst heating device 1B of the present embodiment may apply to the catalyst heating device 1A of Embodiment 2.

### (Embodiment 4)

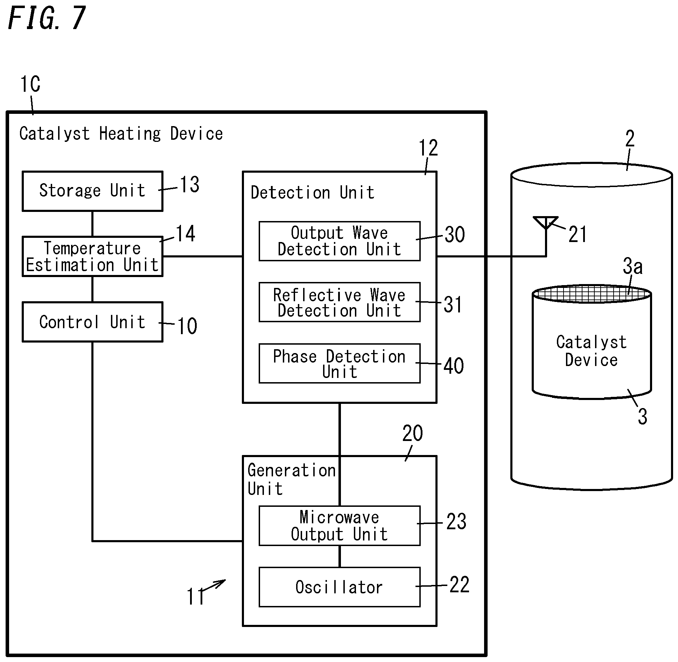

A catalyst heating device 1C of the present embodiment is described with reference to FIG. 7.

The catalyst heating device 1C of the present embodiment is different from the catalyst heating device 1 of Embodiment 1 in that the catalyst heating device 1C further includes a phase detection unit 40. Hereinafter, differences between the present embodiment and Embodiment 1 are described mainly. Note that, analogous components to Embodiment 1 are designated by the same reference signs and thus explanations thereof are omitted appropriately.

The detection unit 12 of the present embodiment includes the phase detection unit 40 in addition to the output wave detection unit 30 and the reflective wave detection unit 31.

The phase detection unit 40 is configured to measure a phase of a reflective wave (unabsorbed microwave) relative to a microwave radiated. In detail, the phase detection unit 40 detects a delay or a lead of a phase of the reflective wave with reference to a phase of a microwave radiated. In summary, the phase detection unit 40 measures a relative phase of the reflective wave with reference to a phase of a microwave radiated.

A temperature table for each frequency stored in the storage unit 13 associates a set of a return loss (a ratio of a value of the transmission power and a value of the reception power) and a phase of the reflective wave with a temperature.

The temperature estimation unit 14 estimates a temperature corresponding to both of a return loss calculated and a phase of a reflective wave measured by the phase detection unit 40 by use of a temperature table corresponding to a frequency of a microwave radiated.

In the present embodiment, in a temperature table for each frequency, each temperature is associated with a return loss (a ratio of a value of the transmission power and a value of the reception power) and a phase of a reflective wave, and therefore accuracy of temperature estimation can be improved.

Note that, features of the catalyst heating device 1C of the present embodiment may apply to the catalyst heating device 1A of Embodiment 2 and the catalyst heating device 1B of Embodiment 3. For example, when features of the catalyst heating device 1C apply to the catalyst heating device 1A, the plurality of detection units 12 (12a and 12b) each include a phase detection unit 40.

### (Embodiment 5)

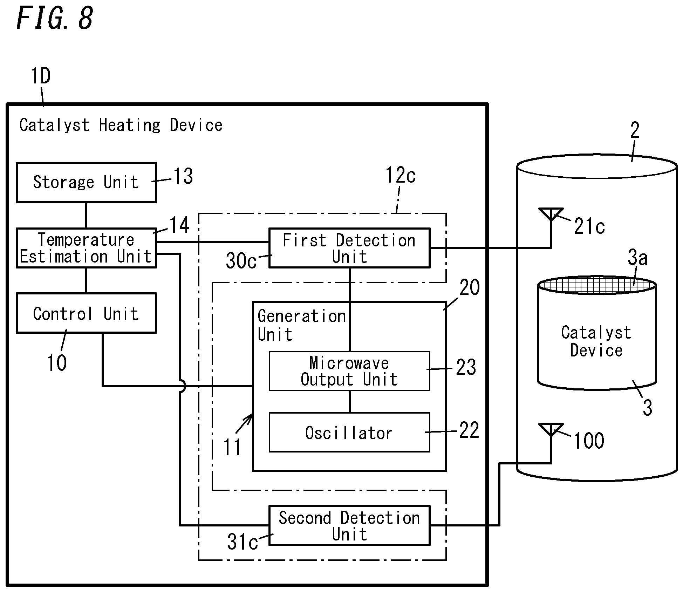

A catalyst heating device 1D of the present embodiment is described with reference to FIG. 8.

The catalyst heating device ID of the present embodiment is different from the catalyst heating device 1 of Embodiment 1 in that the catalyst heating device ID includes an antenna for transmitting a microwave and an antenna for receiving an unabsorbed microwave which are separate parts. Hereinafter, differences between the present embodiment and Embodiment 1 are described mainly. Note that, analogous components to Embodiment 1 are designated by the same reference signs and thus explanations thereof are omitted appropriately.

The catalyst heating device ID includes a control unit 10, an irradiation unit 11, a detection unit 12c, a storage unit 13, and a temperature estimation unit 14.

The irradiation unit 11 includes a generation unit 20 and an antenna 21c (first antenna). The generation unit 20 includes an oscillator 22 and a microwave output unit 23. The generation unit 20 radiates a microwave to the catalyst device 3 via the antenna 21c. In the present embodiment, the antenna 21c is used for transmitting (radiating) a microwave but not used for receiving a reflective wave.

The detection unit 12c includes a first detection unit 30c (first microwave detection unit) and a second detection unit 31c (second microwave detection unit). The first detection unit 30c has an analogous function to the output wave detection unit 30 of Embodiment 1 and measures a value of transmission power of a microwave radiated. In detail, the first detection unit 30c measures a value of power of a signal outputted from the generation unit 20.

The second detection unit 31c includes an antenna 100 (second antenna) for receiving an unabsorbed microwave and measures a value of reception power of an unabsorbed microwave received by the antenna 100.

The temperature estimation unit 14 calculates a return loss by use of a value of the transmission power measured by the first detection unit 30c, a value of the reception power measured by the second detection unit 31c, and the mathematical formula referred to in Embodiment 1. The temperature estimation unit 14 obtains a temperature corresponding to the return loss calculated, from a temperature table corresponding to a frequency of a microwave transmitted.

In the present embodiment, it is sufficient that the antennas 21c and 100 are inside the cavity 2 and positions of the antennas 21c and 100 inside the cavity 2 do not matter. In FIG. 8, the antenna 21c is positioned at a first end of the catalyst device 3 and the antenna 100 is positioned at a second end of the catalyst device 3 but the antennas 21c and 100 may be positioned at the first end or the second end, of the catalyst device 3.

In the present embodiment, transmission of a microwave and reception of an unabsorbed microwave are performed by different antennas (the antenna 21c and the antenna 100) and therefore it is possible to improve accuracy of measurement of a value of the transmission power and accuracy of measurement of a value of the reception power. Consequently, accuracy of temperature estimation can be improved. Especially, placing the catalyst device 3 between the antenna 21c for transmitting a microwave and the antenna 100 for receiving an unabsorbed microwave allows the catalyst heating device ID to measure a temperature of the catalyst device 3 more precisely.

Note that, features of the catalyst heating device 1D of the present embodiment may apply to the catalyst heating device 1A of Embodiment 2, the catalyst heating device 1B of Embodiment 3, and the catalyst heating device 1C of Embodiment 4. For example, when the features of the catalyst heating device 1D apply to the catalyst heating device 1A, there are a plurality of detection units 12c individually corresponding to the plurality of irradiation units 11. Each of the plurality of detection units 12c includes a first detection unit 30c and a second detection unit 31c. Each of the plurality of second detection units 31c includes an antenna 100. Each of the plurality of irradiation units 11 radiates a microwave to the catalyst device 3 via a corresponding antenna 21c of the plurality of antennas 21c. Each of the plurality of first detection units 30c measures a value of transmission power of a microwave outputted via a corresponding antenna 21c of the plurality of antenna 21c. Each of the plurality of second detection units 31c measures a value of reception power of an unabsorbed microwave received by a corresponding antenna 100 of the plurality of antenna 100.

### (Embodiment 6)

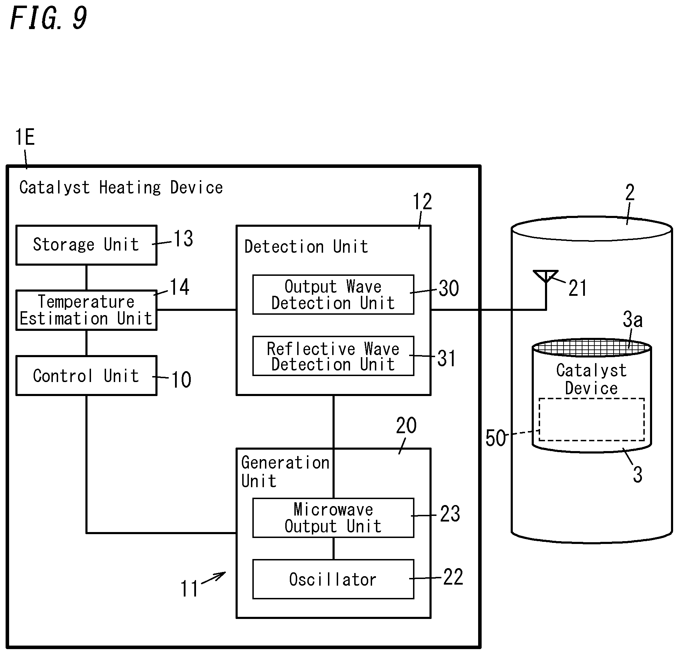

A catalyst heating device IE of the present embodiment is described with reference to FIG. 9.

The present embodiment is different from Embodiment 1 in that the catalyst device 3 to be heated by the catalyst heating device IE is provided with a microwave absorber 50 in addition to the microwave absorber 3a applied onto the ceramic product. Hereinafter, differences between the present embodiment and Embodiment 1 are described mainly. Note that, analogous components to Embodiment 1 are designated by the same reference signs and thus explanations thereof are omitted appropriately.

In the present embodiment, the microwave absorber 50 is provided inside the catalyst device 3. The microwave absorber 50 is different from the microwave absorber 3a applied to the ceramic product and has a physical constant varying with a temperature. For example, the microwave absorber 50 is provided to an inner peripheral surface of a member giving a hollow cylindrical shape to the catalyst device 3. The microwave absorber 50 may be made of the same material as or different material from the microwave absorber 3a applied to the ceramic product.

The catalyst heating device 1E radiates a microwave to the catalyst device 3 provided with the microwave absorber 50.

The catalyst device 3 provided with the microwave absorber 50 can absorb a larger amount of a microwave than the catalyst device 3 not provided with the microwave absorber 50. Therefore, a temperature of the catalyst device 3 can be increased faster. Additionally, sensibility of measurement of a temperature of the catalyst device 3 can be improved.

Note that, the microwave absorber 50 may be provided to a surface of the catalyst device 3. For example, the microwave absorber 50 may be provided to an outer peripheral surface of the member giving the hollow cylindrical shape to the catalyst device 3. Providing the microwave absorber 50 to the surface of the catalyst device 3 can more improve absorbability of microwaves than providing the microwave absorber 50 to the inside of the catalyst device 3.

Additionally, the catalyst device 3 of the present embodiment may apply to any of Embodiments 2 to 5, too.

### (Embodiment 7)

In Embodiment 1 to 6, the catalyst heating devices 1 and 1A to 1E each are configured to heat the catalyst device 3 as a heat target, with microwaves. The heat target may not be limited to the catalyst device 3. The heat target may be an object-to-be-heated examples of which include woody biomass, ceramic, ceramic manufactures, and foods.

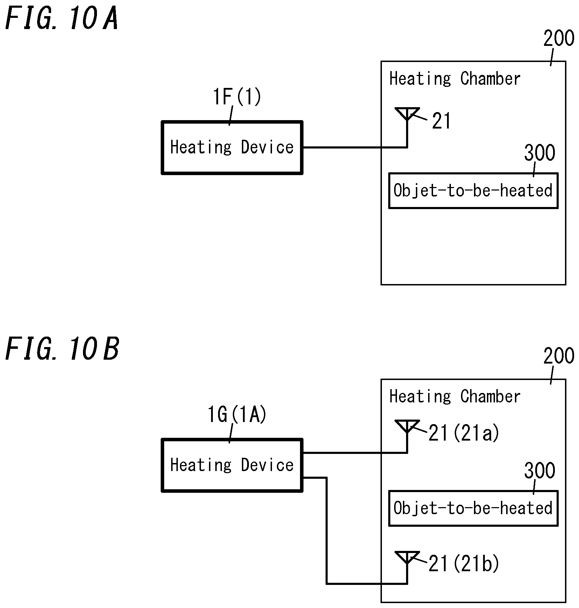

The catalyst heating device 1 according to Embodiment 1 may be used as a heating device IF for heating by microwaves an object-to-be-heated 300 which is a heat target and is disposed inside a heating chamber 200 (see FIG. 10A). Hereinafter, differences between the present embodiment and Embodiment 1 are described mainly. Note that, analogous components to Embodiment 1 are designated by the same reference signs and thus explanations thereof are omitted appropriately.

The heating device IF corresponds to the catalyst heating device 1 according to Embodiment 1, and components of the heating device 1F are similar or analogous to those of the catalyst heating device 1. In summary, the heating device IF includes the control unit 10, the irradiation unit 11, the detection unit 12, the storage unit 13, and the temperature estimation unit 14 which are components of the catalyst heating device 1 shown in FIG. 1. The irradiation unit 11 of the heating device IF includes the generation unit 20 and the antenna 21 which are components of the irradiation unit 11 of the catalyst heating device 1 shown in FIG. 1. The detection unit 12 of the heating device IF includes the output wave detection unit 30 (first microwave detection unit) and the reflective wave detection unit 31 (second microwave detection unit) which are components of the detection unit 12 of the catalyst heating device 1 shown in FIG. 1.

The irradiation unit 11 of the heating device IF of the present embodiment converts a signal generated by the generation unit 20 into a microwave and radiates it to the object-to-be-heated 300 via the antenna 21 to heat the object-to-be-heated 300. The output wave detection unit 30 (first microwave detection unit) of the heating device IF measures a value of transmission power of a microwave radiated from the antenna 21. The reflective wave detection unit 31 (second microwave detection unit) of the heating device IF measures a value of reception power of a microwave received by the antenna 21 (a reflective wave), that is a microwave not absorbed by the object-to-be-heated 300 (an unabsorbed microwave).

The control unit 10, the storage unit 13, and the temperature estimation unit 14 included in the heating device IF of the present embodiment have been already described in relation to Embodiment 1 and thus are not described here. Further, detailed configurations of the generation unit 20 and the detection unit 12 are analogous to configurations shown in FIG. 2 described in relation to Embodiment 1 and thus are not described here.

The heating device IF referred to in the present embodiment can improve heating efficiency for the object-to-be-heated 300.

In another example, the catalyst heating device 1A according to Embodiment 2 may be used as a heating device 1G for heating by microwaves an object-to-be-heated 300 which is a heat target and is disposed inside a heating chamber 200 (see FIG. 10B). Hereinafter, differences between the present embodiment and Embodiments 1 and 2 are described mainly. Note that, analogous components to Embodiments 1 and 2 are designated by the same reference signs and thus explanations thereof are omitted appropriately.

The heating device 1G corresponds to the catalyst heating device 1A according to Embodiment 2. The heating device 1G corresponds to the catalyst heating device 1A according to Embodiment 2, and components of the heating device 1G are similar or analogous to those of the catalyst heating device 1A. In summary, the heating device 1G includes the control unit 10, the plurality of irradiation units 11 (the irradiation units 11a and 11b), the plurality of detection units 12 (the detection units 12a and 12b), the storage unit 13, and the temperature estimation unit 14 which are components of the catalyst heating device 1A shown in FIG. 4.

The irradiation unit 11a of the heating device 1G includes the generation unit 20a and the antenna 21 (21a) which are components of the irradiation unit 11a of the catalyst heating device 1A shown in FIG. 4. The irradiation unit 11b of the heating device 1G includes the generation unit 20b and the antenna 21 (21b) which are components of the irradiation unit 11b of the catalyst heating device 1A shown in FIG. 4. The detection unit 12a of the heating device 1G includes the output wave detection unit 30a (first microwave detection unit) and the reflective wave detection unit 31a (second microwave detection unit) which are components of the detection unit 12a of the catalyst heating device 1 shown in FIG. 4. The detection unit 12b of the heating device 1G includes the output wave detection unit 30b (first microwave detection unit) and the reflective wave detection unit 31b (second microwave detection unit) which are components of the detection unit 12b of the catalyst heating device 1 shown in FIG. 4.

The irradiation unit 11a of the heating device 1G of the present embodiment converts a signal generated by the generation unit 20a into a microwave and radiates it to the object-to-be-heated 300 via the antenna 21a to heat the object-to-be-heated 300. The irradiation unit 11b of the heating device 1G of the present embodiment converts a signal generated by the generation unit 20b into a microwave and radiates it to the object-to-be-heated 300 via the antenna 21b to heat the object-to-be-heated 300. The output wave detection unit 30a of the heating device 1G measures a value of transmission power of a microwave radiated from the antenna 21a. The reflective wave detection unit 31a of the heating device 1G measures a value of reception power of a microwave received by the antenna 21a (a reflective wave), that is a microwave not absorbed by the object-to-be-heated 300 (an unabsorbed microwave). The output wave detection unit 30b of the heating device 1G measures a value of transmission power of a microwave radiated from the antenna 21b. The reflective wave detection unit 31b of the heating device 1G measures a value of reception power of a microwave received by the antenna 21b (a reflective wave), that is a microwave not absorbed by the object-to-be-heated 300 (an unabsorbed microwave).

The control unit 10, the storage unit 13, and the temperature estimation unit 14 included in the heating device 1G of the present embodiment have been already described in relation to Embodiment 1 and thus are not described here. Further, detailed configurations of the generation units 20a and 20b and the detection units 12a and 12b are analogous to configurations shown in FIG. 5 described in relation to Embodiment 2 and thus are not described here.

The heating device 1G described in relation to the present embodiment can improve heating efficiency for the object-to-be-heated 300.

Alternatively, the catalyst heating device 1B according to Embodiment 3 may be used as a heating device for heating by microwaves an object-to-be-heated 300 which is a heat target. In this case, the heating device IF or the heating device 1G may further include the calibration unit 15 (see FIG. 6) described in relation to Embodiment 3. Also in this case, the heating device IF or 1G can improve heating efficiency for the object-to-be-heated 300.

Alternatively, the catalyst heating device 1C according to Embodiment 4 may be used as a heating device for heating by microwaves an object-to-be-heated 300 which is a heat target. In this case, the heating device IF or the heating device 1G may further include the phase detection unit 40 (see FIG. 7) described in relation to Embodiment 4. Also in this case, the heating device IF or 1G can improve heating efficiency for the object-to-be-heated 300.

Alternatively, the catalyst heating device 1D according to Embodiment 5 may be used as a heating device for heating by microwaves an object-to-be-heated 300 which is a heat target. In this case, the heating device IF or the heating device 1G may further include the antenna 100 (see FIG. 8) for receiving an unabsorbed microwave, which is described in relation to Embodiment 5. Also in this case, the heating device IF or 1G can improve heating efficiency for the object-to-be-heated 300.

Alternatively, the catalyst heating device IE according to Embodiment 6 may be used as a heating device for heating by microwaves an object-to-be-heated 300 which is a heat target. In this case, the object-to-be-heated may be provided with the microwave absorber 50 (see FIG. 9) described in relation to Embodiment 6. Also in this case, the heating device IF or 1G can improve heating efficiency for the object-to-be-heated 300.

### (Variations)

Hereinafter, variations are listed. Note that, variations described below may be appropriately combined with each of the above embodiments.

In each of the aforementioned embodiments, the storage unit 13 is configured to store a temperature table for each frequency but may not be configured as above. The storage unit 13 may store a single table obtained by merging temperature tables for individual frequencies.

In each of the aforementioned embodiments, the temperature estimation unit 14 is configured to estimate a temperature of the catalyst device 3 by use of a temperature table corresponding to a frequency of a microwave radiated, but may not be configured as above. The temperature estimation unit 14 may estimate a temperature by use of an arithmetic expression providing an output value which is an estimation temperature of the catalyst device 3, in response to an input value which is a return loss of a microwave radiated (a ratio of a value of the transmission power and a value of the reception power). For example, the storage unit 13 stores, a relation between a return loss (a ratio of a value of the transmission power and a value of the reception power) and a temperature, as an arithmetic expression, for each frequency of a microwave, in advance. The temperature estimation unit 14 estimates a temperature of the catalyst device 3 by use of an arithmetic expression which is one of arithmetic expressions stored in the storage unit 13 and corresponds to a frequency of a microwave radiated.

In each of the aforementioned embodiments, the catalyst device 3 is configured to purify exhaust but may not be limited to being configured as above. The catalyst device 3 may be installed in something other than a vehicle, and may be configured to purify gas other than exhaust. In this regard, the catalyst may be changed in accordance with gas to be purified.

### (Conclusion)

As described above, a first aspect is a catalyst heating device (1, 1B to IE) including an irradiation unit (11) and a control unit (10). The irradiation unit (11) includes an antenna (21, 21c) and is configured to radiate a microwave through the antenna (21, 21c) to a catalyst device (3) which has microwave absorbability and is configured to purify gas, to heat the catalyst device (3). The control unit (10) has a function of allowing the irradiation unit (11) to make irradiation with the microwave under an irradiation condition including at least any of a frequency of the microwave and a position of the antenna (21, 21c), and has a function of changing the irradiation condition.

According to this configuration, the catalyst heating device (1, 1B to IE) changes the irradiation condition and radiates a microwave. Therefore, heating efficiency of the catalyst device 3 can be improved.

A second aspect is based on the catalyst heating device (1, 1B to IE) according to the first aspect and further includes a first microwave detection unit (the output wave detection unit 30, the first detection unit 30c) and a second microwave detection unit (the reflective wave detection unit 31, the second detection unit 31c). The first microwave detection unit is configured to measure a value of transmission power of the microwave radiated from the irradiation unit (11). The second microwave detection unit is configured to, in response to reception of an unabsorbed microwave which is part of the microwave and is not absorbed by the catalyst device (3), measure a value of reception power of the unabsorbed microwave. The control unit (10) is configured to change the irradiation condition based on the value of the transmission power and the value of the reception power.

According to this configuration, the catalyst heating device (1, 1B to IE) can change the irradiation condition in accordance with an extent that a microwave is absorbed by the catalyst device (3).

A third aspect based on the catalyst heating device (1, 1B to IE) according to the second aspect and further includes a temperature estimation unit (14) configured to calculate a ratio of a value of the transmission power and a value of the reception power and estimate a temperature of the catalyst device (3) corresponding to the ratio. The control unit (10) is configured to change the irradiation condition in accordance with the temperature estimated by the temperature estimation unit (14).

According to this configuration, the catalyst heating device (1, 1B to IE) can estimate a temperature of the catalyst device (3) in accordance with an extent that a microwave is absorbed by the catalyst device (3). Further, the catalyst heating device (1, 1B to IE) can change the irradiation condition in accordance with the temperature estimated.

A fourth aspect is based on the catalyst heating device (1, 1B to IE) according to the third aspect and further includes a storage unit (13) configured to store a ratio of a value of the transmission power and a value of the reception power and a temperature of the catalyst device (3) associated with each other, for each of a plurality of the irradiation conditions. The temperature estimation unit (14) is configured to estimate a temperature of the catalyst device (3) corresponding to the ratio calculated, by use of the storage unit (13).

According to this configuration, the catalyst heating device (1, 1B to IE) includes the storage unit (13) and therefore can estimate a temperature of the catalyst device (3) without performing complicated calculations.

A fifth aspect is based on the catalyst heating device (1, 1B to IE) according to the fourth aspect. The irradiation condition includes a frequency of the microwave. The storage unit (13) is configured to store a ratio of a value of the transmission power and a value of the reception power and a temperature of the catalyst device (3) associated with each other, for each of a plurality of the frequencies. The temperature estimation unit (14) is configured to calculate a temperature of the catalyst device (3) for each of the plurality of frequencies from the storage unit (13), and estimate, by use of a plurality of the temperatures individually calculated for the plurality of frequencies, a temperature of the catalyst device (3).

According to this configuration, the catalyst heating device (1, 1B to IE) estimates a temperature of the catalyst device (3) by use of the plurality of temperatures calculated for the plurality of frequencies, and therefore accuracy of the temperature estimated can be improved.

A sixth aspect is based on the catalyst heating device (1B) according to the fourth or fifth aspect and further includes a calibration unit (15) configured to correct the temperature stored in the storage unit (13). The irradiation unit (11) is configured to radiate a correction microwave when a temperature of the catalyst device (3) is equal to a predetermined temperature. The first microwave detection unit is configured to measure, at a timing of radiating the correction microwave, a value of transmission power of the correction microwave. The second microwave detection unit is configured to measure, at a timing of receiving of an unabsorbed correction microwave which is part of the correction microwave and is not absorbed by the catalyst device (3), a value of reception power of the unabsorbed correction microwave. The temperature estimation unit (14) is configured to estimate a temperature of the catalyst device (3) corresponding to a ratio of the value of the transmission power of the correction microwave and the value of the reception power of the unabsorbed correction microwave, by use of the storage unit (13). The calibration unit (15) is configured to determine a correction value from a temperature estimated by the temperature estimation unit (14) and the predetermined temperature, and correct the temperature stored in the storage unit (13) by use of the correction value.

According to this configuration, the catalyst heating device (1B) can reduce an error between a temperature estimated and an actual temperature.

A seventh aspect is based on the catalyst heating device (1C) according to the fourth or fifth aspect and further includes a phase detection unit (40) configured to measure a phase of the unabsorbed microwave from the microwave. In the storage unit (13), the temperature is further associated with a phase of the unabsorbed microwave. The temperature estimation unit (14) is configured to estimate a temperature of the catalyst device (3) corresponding to a ratio of a value of the transmission power of the microwave and a value of the reception power of the unabsorbed microwave and additionally corresponding to a phase of the unabsorbed microwave, from the storage unit (13).

According to this configuration, the catalyst heating device (1C) can improve accuracy of the temperature estimated.

An eighth aspect is based on the catalyst heating device (ID) according to any one of the second to seventh aspects and further includes a second antenna (the antenna 100) which is different from the antenna (21c) serving as a first antenna and is used for receiving the unabsorbed microwave. The second microwave detection unit is configured to measure a value of power of the unabsorbed microwave received by the second antenna.

According to this configuration, the catalyst heating device (ID) measures values of the transmission power and the reception power by use of separate antennas, and therefore can improve accuracy of temperature estimation.

A ninth aspect is based on the catalyst heating device (IE) according to any one of the first to eighth aspects. The catalyst device (3) is formed to have a hollow cylindrical shape. A microwave absorber (50) having a physical constant changeable depending on a temperature is provided to a surface or an inside of the catalyst device (3). The irradiation unit (11) is configured to radiate the microwave to the catalyst device (3) including the microwave absorber (50).

According to this configuration, the catalyst heating device (IE) can improve accuracy of temperature estimation.

A tenth aspect is a catalyst heating device (1A to IE) including a plurality of irradiation units (11) and a control unit (10). Each of the plurality of irradiation units (11) includes an antenna (21a, 21b) and is configured to radiate a microwave through the antenna (21a, 21b) to a catalyst device (3) which has microwave absorbability and is configured to purify gas, to heat the catalyst device (3). The control unit (10) has a function of allowing each of the plurality of irradiation units (11) to make irradiation with the microwave under an irradiation condition including at least any of a frequency of the microwave, a phase of the microwave, and a position of the antenna (21a, 21b), and has a function of changing the irradiation condition.

According to this configuration, the catalyst heating device (1A to IE) uses the plurality of irradiation units (11) as well as changes the irradiation condition and radiates a microwave. Therefore, heating efficiency of the catalyst device 3 can be improved.

An eleventh aspect is based on the catalyst heating device (1A to IE) according to the tenth aspect. The irradiation condition include a phase of the microwave. The control unit (10) is configured to change the irradiation conditions of the plurality of irradiation units (11) so that a plurality of the phases are different from each other and control the plurality of irradiation units (11) so that the plurality of irradiation units (11) radiate microwaves which have a same frequency but mutually different phases.

According to this configuration, the catalyst heating device (1A to IE) can improve heating efficiency.

A twelfth aspect is based on the catalyst heating device (1A to IE) according to the tenth or eleventh aspect and further includes a plurality of first microwave detection units (the output wave detection units 30a and 30b) and a plurality of second microwave detection units (the reflective wave detection units 31a and 31b). The plurality of first microwave detection units are individually associated with the plurality of irradiation units (11) and each are configured to measure a value of transmission power of a microwave radiated from an associated irradiation unit (11) of the plurality of irradiation units (11). The plurality of second microwave detection units are individually associated with the plurality of irradiation units (11) and each are configured to, in response to reception of an unabsorbed microwave which is part of a microwave radiated from an associated irradiation unit (11) of the plurality of irradiation units (11) and is not absorbed by the catalyst device (3), measure a value of reception power of the unabsorbed microwave. The control unit (10) is configured to change the irradiation conditions based on values of the transmission power individually measured by the plurality of first microwave detection units and values of the reception power individually measured by the plurality of second microwave detection units.

According to this configuration, the catalyst heating device (1A to IE) can change the irradiation condition in accordance with an extent that a microwave is absorbed by the catalyst device (3).

A thirteenth aspect is based on the catalyst heating device (1A to IE) according to the twelfth aspect and further includes a temperature estimation unit (14). The temperature estimation unit (14) is configured to estimate a temperature of the catalyst device (3) based on values of the transmission power measured by the plurality of first microwave detection units and values of the reception power measured by the plurality of second microwave detection units. The control unit (10) is configured to change the irradiation conditions in accordance with the temperature estimated by the temperature estimation unit (14).

According to this configuration, the catalyst heating device (1A to IE) can estimate a temperature of the catalyst device (3) in accordance with an extent that a microwave is absorbed by the catalyst device (3). Further, the catalyst heating device (1A to IE) can change the irradiation condition in accordance with the temperature estimated.

A fourteenth aspect is based on the catalyst heating device (1A to IE) according to the thirteenth aspect and further includes a storage unit (13) configured to store a ratio of a value of the transmission power and a value of the reception power and a temperature of the catalyst device (3) associated with each other, for each of the irradiation conditions. The temperature estimation unit (14) is configured to calculate, for each of the plurality of irradiation units (11), a ratio of a value of the transmission power and a value of the reception power, obtain, for each of the ratios calculated, a temperature of the catalyst device (3) corresponding to a ratio from the storage unit (13), and estimate a temperature of the catalyst device (3) by use of the temperatures obtained.

According to this configuration, the catalyst heating device (1A to IE) uses the plurality of first microwave detection units and the plurality of second microwave detection units, and therefore can improve accuracy of the temperature estimated.

A fifteenth aspect is based on the catalyst heating device (1A to IE) according to the thirteenth aspect and further includes a storage unit (13). The storage unit (13) is configured to store, for each of the irradiation conditions, a ratio of total transmission power which is a sum of values of the transmission power measured by the plurality of first microwave detection units and total reception power which is a sum of values of the reception power measured by the plurality of second microwave detection units and a temperature of the catalyst device (3) associated with each other. The temperature estimation unit (14) is configured to calculate a ratio of the total transmission power which is a sum of values of the transmission power measured by the plurality of first microwave detection units and the total reception power which is a sum of values of the reception power measured by the plurality of second microwave detection units. The temperature estimation unit (14) is configured to estimate a temperature of the catalyst device (3) corresponding to the ratio calculated, from the storage unit (13).

According to this configuration, the catalyst heating device (1A to IE) use the plurality of first microwave detection units and the plurality of second microwave detection units, and therefore accuracy of the temperature estimated can be improved.

A sixteenth aspect is based on the catalyst heating device (1A to IE) according to the fourteenth or fifteenth aspect. Each of the irradiation conditions includes a frequency of the microwave. The storage unit (13) is configured to store, for each of a plurality of the frequencies, a ratio of a value of the transmission power and a value of the reception power and a temperature of the catalyst device (3) associated with each other. The temperature estimation unit (14) is configured to calculate a temperature of the catalyst device (3) from the storage unit (13) for each of the plurality of frequencies and estimate a temperature of the catalyst device (3) by use of the temperatures calculated for the plurality of frequencies.

According to this configuration, the catalyst heating device (1A to 1E) estimates a temperature of the catalyst device (3) by use of the plurality of temperatures calculated for the plurality of frequencies, and therefore accuracy of the temperature estimated can be improved.

A seventeenth aspect is based on the catalyst heating device (1B) according to any one of the fourteenth to sixteenth aspects and further includes a calibration unit (15) configured to correct the temperature stored in the storage unit (13). Each of the plurality of irradiation units (11) is configured to radiate a correction microwave when a temperature of the catalyst device (3) is equal to a predetermined temperature. Each of the plurality of first microwave detection units is configured to measure, at a timing of radiating the correction microwave, a value of transmission power of the correction microwave. Each of the plurality of second microwave detection units is configured to measure, at a timing of receiving an unabsorbed correction microwave which is part of the correction microwave and is not absorbed by the catalyst device (3), a value of reception power of the unabsorbed correction microwave. The temperature estimation unit (14) is configured to estimate a temperature of the catalyst device (3) corresponding to a ratio of a value of the transmission power of the correction microwave and a value of the reception power of the unabsorbed correction microwave, by use of the storage unit (13). The calibration unit (15) is configured to determine a correction value from the temperature estimated by the temperature estimation unit (14) and the predetermined temperature and the temperature stored in the storage unit (13) by use of the correction value.

According to this configuration, the catalyst heating device (1B) can reduce an error between a temperature estimated and an actual temperature.

An eighteenth aspect is based on the catalyst heating device (1C) according to any one of the fourteenth to seventeenth aspects and further includes a phase detection unit (40) configured to measure a phase of the unabsorbed microwave from the microwave. In the storage unit (13), the temperature is further associated with a phase of the unabsorbed microwave. The temperature estimation unit (14) is configured to estimate a temperature of the catalyst device (3) corresponding to a ratio of a value of the transmission power of the microwave and a value of the reception power of the unabsorbed microwave and additionally corresponding to a phase of the unabsorbed microwave, from the storage unit (13).

According to this configuration, the catalyst heating device (1C) can improve accuracy of the temperature estimated.

A nineteenth aspect is based on the catalyst heating device (ID) according to any one of the twelfth to eighteenth aspects and further includes a plurality of second antennas (the antennas 100) which are different from the antennas (21c) serving as a plurality of first antennas and are used for receiving a plurality of the unabsorbed microwaves. The plurality of second microwave detection units each are configured to measure a value of power of the unabsorbed microwave received by a corresponding second antenna of the plurality of second antennas.

According to this configuration, the catalyst heating device (ID) measures values of the transmission power and the reception power by use of the plurality of first antennas and the plurality of second antennas, respectively, and therefore can improve accuracy of temperature estimation.

A twentieth aspect is based on the catalyst heating device (IE) according to any one of the tenth to nineteenth aspects. The catalyst device (3) is formed to have a hollow cylindrical shape. A microwave absorber (50) having a physical constant changeable depending on a temperature is provided to a surface or an inside of the catalyst device (3). The plurality of irradiation units (11) each are configured to radiate the microwave to the catalyst device (3) including the microwave absorber (50).

According to this configuration, the catalyst heating device (IE) can improve accuracy of temperature estimation.

A twenty-first aspect is a heating device (IF) including an irradiation unit (11), a control unit (10), a first microwave detection unit (the output wave detection unit 30, the first detection unit 30c), and a second microwave detection unit (the reflective wave detection unit 31, the second detection unit 31c). The irradiation unit (11) includes an antenna (21, 21c) and is configured to radiate a microwave through the antenna (21, 21c) to an object-to-be-heated (300) serving as a heat target to heat the object-to-be-heated (300). The control unit (10) has a function of allowing the irradiation unit (11) to make irradiation with the microwave under an irradiation condition including at least any of a frequency of the microwave and a position of the antenna (21, 21c), and has a function of changing the irradiation condition. The first microwave detection unit is configured to measure a value of transmission power of the microwave radiated from the irradiation unit (11). The second microwave detection unit is configured to, in response to reception of an unabsorbed microwave which is part of the microwave and is not absorbed by the object-to-be-heated (300), measure a value of reception power of the unabsorbed microwave. The control unit (10) is configured to change the irradiation condition based on the value of the transmission power and the value of the reception power.

According to this configuration, the heating device (IF) can improve heating efficiency for the object-to-be-heated (300).

A twenty-second aspect is a heating device (1G) including a plurality of irradiation units (11) and a control unit (10). Each of the plurality of irradiation units (11) includes an antenna (21a, 21b) and is configured to radiate a microwave through the antenna (21a, 21b) to an object-to-be-heated (300) serving as a heat target to heat the object-to-be-heated (300). The control unit (10) has a function of allowing each of the plurality of irradiation units (11) to make irradiation with the microwave under an irradiation condition including at least any of a frequency of the microwave, a phase of the microwave, and a position of the antenna (21a, 21b), and has a function of changing the irradiation condition.

According to this configuration, the heating device (1G) can improve heating efficiency for the object-to-be-heated (300).

A twenty-third aspect is based on the catalyst heating device (1, 1A to 1C, IE) according to any one of the second to seventh aspects. The antenna (21) is configured to receive an unabsorbed microwave. The second microwave detection unit is configured to measure a value of power of an unabsorbed microwave received by the antenna (21).

According to this configuration, the catalyst heating device (1, 1A to 1C, IE) can use the antenna (21) efficiently.

A twenty-fourth aspect is based on the catalyst heating device (1, 1A to 1C, IE) according to any one of the twelfth to eighteenth aspects. An antenna (21) of each of the plurality of irradiation units (11) is configured to receive an unabsorbed microwave. The second microwave detection unit is configured to measure a value of power of an unabsorbed microwave received by a corresponding antenna (21) of the plurality of antennas (21).

According to this configuration, the catalyst heating device (1, 1A to 1C, 1E) can use the plurality of antennas (21) efficiently.

### Reference Signs List

- 1, 1A to 1E: Catalyst Heating Device
- 1F, 1G: Heating Device
- 3: Catalyst Device
- 10: Control Unit
- 11, 11a, 11b: Irradiation Unit
- 12, 12a, 12b, 12c: Detection Unit
- 13: Storage Unit
- 14: Temperature Estimation Unit
- 15: Calibration Unit
- 21, 21a, 21b, 21c: Antenna (First Antenna)
- 30, 30a, 30b: Output Wave Detection Unit (First Microwave Detection Unit)
- 30c: First Detection Unit (First Microwave Detection Unit)
- 31, 31a, 31b: Reflective Wave Detection Unit (Second Microwave Detection Unit)
- 31c: Second Detection Unit (Second Microwave Detection Unit)
- 40: Phase Detection Unit
- 50: Microwave Absorber
- 100: Antenna (Second Antenna)
- 300: Object to be heated

## Claims

1. A catalyst heating device comprising:
an irradiation unit which includes an antenna and is configured to radiate a microwave through the antenna to a catalyst device which has microwave absorbability and is configured to purify gas, to heat the catalyst device; and
a control unit having a function of allowing the irradiation unit to make irradiation with the microwave under an irradiation condition including at least any of a frequency of the microwave and a position of the antenna, and having a function of changing the irradiation condition.

2. The catalyst heating device according to claim 1, further comprising:
a first microwave detection unit configured to measure a value of transmission power of the microwave radiated from the irradiation unit; and
a second microwave detection unit configured to, in response to reception of an unabsorbed microwave which is part of the microwave and is not absorbed by the catalyst device, measure a value of reception power of the unabsorbed microwave,
wherein the control unit is configured to change the irradiation condition based on the value of the transmission power and the value of the reception power.

3. The catalyst heating device according to claim 2, further comprising a temperature estimation unit configured to calculate a ratio of a value of the transmission power and a value of the reception power and estimate a temperature of the catalyst device corresponding to the ratio,
wherein the control unit is configured to change the irradiation condition in accordance with the temperature estimated by the temperature estimation unit.

4. The catalyst heating device according to claim 3, further comprising a storage unit configured to store a ratio of a value of the transmission power and a value of the reception power and a temperature of the catalyst device associated with each other, for each of a plurality of the irradiation conditions,
wherein the temperature estimation unit is configured to estimate a temperature of the catalyst device corresponding to the ratio calculated, by use of the storage unit.

5. The catalyst heating device according to claim 4, wherein:
the irradiation condition includes a frequency of the microwave;
the storage unit is configured to store a ratio of a value of the transmission power and a value of the reception power and a temperature of the catalyst device associated with each other, for each of a plurality of the frequencies; and
the temperature estimation unit is configured to calculate a temperature of the catalyst device for each of the plurality of frequencies from the storage unit, and estimate, by use of a plurality of the temperatures individually calculated for the plurality of frequencies, a temperature of the catalyst device.

6. The catalyst heating device according to claim 4 or 5, further comprising a calibration unit configured to correct the temperature stored in the storage unit,
wherein:
the irradiation unit is configured to radiate a correction microwave when a temperature of the catalyst device is equal to a predetermined temperature;
the first microwave detection unit is configured to measure, at a timing of radiating the correction microwave, a value of transmission power of the correction microwave;
the second microwave detection unit is configured to measure, at a timing of receiving of an unabsorbed correction microwave which is part of the correction microwave and is not absorbed by the catalyst device, a value of reception power of the unabsorbed correction microwave;
the temperature estimation unit is configured to estimate a temperature of the catalyst device corresponding to a ratio of the value of the transmission power of the correction microwave and the value of the reception power of the unabsorbed correction microwave, by use of the storage unit; and
the calibration unit is configured to determine a correction value from a temperature estimated by the temperature estimation unit and the predetermined temperature, and correct the temperature stored in the storage unit by use of the correction value.

7. The catalyst heating device according to claim 4 or 5, further comprising a phase detection unit configured to measure a phase of the unabsorbed microwave from the microwave,
wherein:
in the storage unit, the temperature is further associated with a phase of the unabsorbed microwave; and
the temperature estimation unit is configured to estimate a temperature of the catalyst device corresponding to a ratio of a value of the transmission power of the microwave and a value of the reception power of the unabsorbed microwave and additionally corresponding to a phase of the unabsorbed microwave, from the storage unit.

8. The catalyst heating device according to any one of claims 2 to 7, further comprising a second antenna which is different from the antenna serving as a first antenna and is used for receiving the unabsorbed microwave,
wherein the second microwave detection unit is configured to measure a value of power of the unabsorbed microwave received by the second antenna.

9. The catalyst heating device according to any one of claims 1 to 8, wherein:
the catalyst device is formed to have a hollow cylindrical shape;
a microwave absorber having a physical constant changeable depending on a temperature is provided to a surface or an inside of the catalyst device; and
the irradiation unit is configured to radiate the microwave to the catalyst device including the microwave absorber.

10. A catalyst heating device comprising:
a plurality of irradiation units each of which includes an antenna and is configured to radiate a microwave through the antenna to a catalyst device which has microwave absorbability and is configured to purify gas, to heat the catalyst device; and
a control unit having a function of allowing each of the plurality of irradiation units to make irradiation with the microwave under an irradiation condition including at least any of a frequency of the microwave, a phase of the microwave, and a position of the antenna, and having a function of changing the irradiation condition.

11. The catalyst heating device according to claim 10, wherein:
the irradiation condition include a phase of the microwave; and
the control unit is configured to
change the irradiation conditions of the plurality of irradiation units so that a plurality of the phases are different from each other and
control the plurality of irradiation units so that the plurality of irradiation units radiate microwaves which have a same frequency but mutually different phases.

12. The catalyst heating device according to claim 10 or 11, further comprising:
a plurality of first microwave detection units which are individually associated with the plurality of irradiation units and each are configured to measure a value of transmission power of a microwave radiated from an associated irradiation unit of the plurality of irradiation units; and
a plurality of second microwave detection units which are individually associated with the plurality of irradiation units and each are configured to, in response to reception of an unabsorbed microwave which is part of a microwave radiated from an associated irradiation unit of the plurality of irradiation units and is not absorbed by the catalyst device, measure a value of reception power of the unabsorbed microwave,
wherein the control unit is configured to change the irradiation conditions based on values of the transmission power individually measured by the plurality of first microwave detection units and values of the reception power individually measured by the plurality of second microwave detection units.

13. The catalyst heating device according to claim 12, further comprising a temperature estimation unit configured to estimate a temperature of the catalyst device based on values of the transmission power measured by the plurality of first microwave detection units and values of the reception power measured by the plurality of second microwave detection units,
wherein the control unit is configured to change the irradiation conditions in accordance with the temperature estimated by the temperature estimation unit.

14. The catalyst heating device according to claim 13, further comprising a storage unit configured to store a ratio of a value of the transmission power and a value of the reception power and a temperature of the catalyst device associated with each other, for each of the irradiation conditions,
wherein the temperature estimation unit is configured to calculate, for each of the plurality of irradiation units, a ratio of a value of the transmission power and a value of the reception power, obtain, for each of the ratios calculated, a temperature of the catalyst device corresponding to a ratio from the storage unit, and estimate a temperature of the catalyst device by use of the temperatures obtained.

15. The catalyst heating device according to claim 13, further comprising a storage unit configured to store, for each of the irradiation conditions, a ratio of total transmission power which is a sum of values of the transmission power measured by the plurality of first microwave detection units and total reception power which is a sum of values of the reception power measured by the plurality of second microwave detection units and a temperature of the catalyst device associated with each other,
wherein the temperature estimation unit is configured to calculate a ratio of the total transmission power which is a sum of values of the transmission power measured by the plurality of first microwave detection units and the total reception power which is a sum of values of the reception power measured by the plurality of second microwave detection units and estimate a temperature of the catalyst device corresponding to the ratio calculated, from the storage unit.

16. The catalyst heating device according to claim 14 or 15, wherein:
each of the irradiation conditions includes a frequency of the microwave;
the storage unit is configured to store, for each of a plurality of the frequencies, a ratio of a value of the transmission power and a value of the reception power and a temperature of the catalyst device associated with each other; and
the temperature estimation unit is configured to calculate a temperature of the catalyst device from the storage unit for each of the plurality of frequencies and estimate a temperature of the catalyst device by use of the temperatures calculated for the plurality of frequencies.

17. The catalyst heating device according to any one of claims 14 to 16, further comprising a calibration unit configured to correct the temperature stored in the storage unit,
wherein:
each of the plurality of irradiation units is configured to radiate a correction microwave when a temperature of the catalyst device is equal to a predetermined temperature,
each of the plurality of first microwave detection units is configured to measure, at a timing of radiating the correction microwave, a value of transmission power of the correction microwave;
each of the plurality of second microwave detection units is configured to measure, at a timing of receiving an unabsorbed correction microwave which is part of the correction microwave and is not absorbed by the catalyst device, a value of reception power of the unabsorbed correction microwave;
the temperature estimation unit is configured to estimate a temperature of the catalyst device corresponding to a ratio of a value of the transmission power of the correction microwave and a value of the reception power of the unabsorbed correction microwave, by use of the storage unit; and
the calibration unit is configured to determine a correction value from the temperature estimated by the temperature estimation unit and the predetermined temperature and the temperature stored in the storage unit by use of the correction value.

18. The catalyst heating device according to any one of claims 14 to 17, further comprising a phase detection unit configured to measure a phase of the unabsorbed microwave from the microwave,
wherein:
in the storage unit, the temperature is further associated with a phase of the unabsorbed microwave; and
the temperature estimation unit is configured to estimate a temperature of the catalyst device corresponding to a ratio of a value of the transmission power of the microwave and a value of the reception power of the unabsorbed microwave and additionally corresponding to a phase of the unabsorbed microwave, from the storage unit.

19. The catalyst heating device according to any one of claims 12 to 18, further comprising a plurality of second antennas which are different from the antennas serving as a plurality of first antennas and are used for receiving a plurality of the unabsorbed microwaves,
wherein the plurality of second microwave detection units each are configured to measure a value of power of the unabsorbed microwave received by a corresponding second antenna of the plurality of second antennas.

20. The catalyst heating device according to any one of claims 10 to 19, wherein:
the catalyst device is formed to have a hollow cylindrical shape;
a microwave absorber having a physical constant changeable depending on a temperature is provided to a surface or an inside of the catalyst device; and
the plurality of irradiation units each are configured to radiate the microwave to the catalyst device including the microwave absorber.

21. A heating device comprising:
an irradiation unit which includes an antenna and is configured to radiate a microwave through the antenna to an object-to-be-heated serving as a heat target to heat the object-to-be-heated;
a control unit having a function of allowing the irradiation unit to make irradiation with the microwave under an irradiation condition including at least any of a frequency of the microwave and a position of the antenna, and having a function of changing the irradiation condition;
a first microwave detection unit configured to measure a value of transmission power of the microwave radiated from the irradiation unit; and
a second microwave detection unit configured to, in response to reception of an unabsorbed microwave which is part of the microwave and is not absorbed by the object-to-be-heated, measure a value of reception power of the unabsorbed microwave,
the control unit being configured to change the irradiation condition based on the value of the transmission power and the value of the reception power.

22. A heating device comprising:
a plurality of irradiation units each of which includes an antenna and is configured to radiate a microwave through the antenna to an object-to-be-heated serving as a heat target to heat the object-to-be-heated; and
a control unit having a function of allowing each of the plurality of irradiation units to make irradiation with the microwave under an irradiation condition including at least any of a frequency of the microwave, a phase of the microwave, and a position of the antenna, and having a function of changing the irradiation condition.
